Europäisches Patentamt

**European Patent Office**

Office européen des brevets

(11) Numéro de publication: **0 354 091**
**A1**

# (12) DEMANDE DE BREVET EUROPEEN

(21) Numéro de dépôt: **89402078.3**

(22) Date de dépôt: **21.07.89**

(51) Int. Cl.5: **A 23 P 1/10**
**A 23 L 1/322**

(30) Priorité: **03.08.88 FR 8810764**

(43) Date de publication de la demande:
**07.02.90 Bulletin 90/06**

(84) Etats contractants désignés:
**AT BE CH DE ES GB GR IT LI LU NL SE**

(71) Demandeur: **OV'ACTION (SA)**
**Zone Industrielle de Liévin BP 52**
**F-62800 Lievin (FR)**

(72) Inventeur: **Hauton, François**
**46, bd Charles de Gaulle**
**F-92390 Villeneuve La Garenne (FR)**

**Dumas, Frédéric**
**43, rue Henri Bailleux**
**F-59160 Lomme (FR)**

**Bouttemy, Franck**
**62, rue de Lyon**
**F-62217 Achicourt (FR)**

**Huc, Christian**
**53, rue des augustines**
**F-62000 Arras (FR)**

(74) Mandataire: **Hasenrader, Hubert et al**
**Cabinet BEAU DE LOMENIE 55, rue d'Amsterdam**
**F-75008 Paris (FR)**

(54) **Procédé et installation de mise en forme d'un produit alimentaire continu lors de son durcissement.**

(57) L'invention concerne la mise en forme d'un produit alimentaire, qui est initialement à l'état liquide, par exemple une coule fraîche de blanc ou de jaune d'oeuf, lors de son durcissement. Elle consiste à dérouler continûment une bande (4) d'un matériau flexible, par exemple de papier enduite de téflon, à déformer cette bande pendant son déplacement de manière à lui donner la forme d'un récipient continu, à alimenter le produit liquide dans ledit récipient, à traiter par exemple par chauffage le produit jusqu'à son durcissement, à remettre à plat la bande (4) et à entraîner celle-ci dans une direction opposée à sa direction première tout en entraînant le produit durci et mis en forme.

L'installation comporte en particulier des moyens de déformation comportant des cylindres de pression (10,11) présentant des empreintes mâle et femelle et aptes à marquer sur la bande des traces longitudinales de pliage, ainsi que des flasques (15,16) pour relever les bords de la bande (4) selon lesdites traces.

De préférence le chauffage est réalisé dans une cavité micro-ondes (19), et on applique au-dessus de la bande (4) en forme pendant le chauffage une seconde bande (28) formant un couvercle étanche à la vapeur d'eau.

FIG 1

EP 0 354 091 A1

Bundesdruckerei Berlin

Description

# PROCEDE ET INSTALLATION DE MISE EN FORME D'UN PRODUIT ALIMENTAIRE CONTINU LORS DE SON DURCISSEMENT

La présente invention concerne la mise en forme et la cuisson de produits alimentaires industriels se présentant sous la forme d'une bande continue destinée à être débitée à la longueur et éventuellement à la largeur souhaitées.

On connaît par le brevet français N° 2.589.046 un dispositif de mise en forme et de cuisson d'un aliment industriel comportant un convoyeur muni de moyens de chauffage et des moyens de découpe . Le produit alimentaire, liquide, est déposé à l'aide d'une tuyère d'extrusion sur le convoyeur sous forme d'un film, le convoyeur étant préalablement huilé. La gélification du produit alimentaire est obtenue lors de la mise en contact du produit liquide sur le convoyeur qui est chauffé à une température de l'ordre de 50 à 80°C , et par projection de vapeur sur la partie supérieure du produit, jusqu'à obtention de la dureté requise. Ainsi le produit fini conserve la forme qu'il avait à la sortie de l'extrudeuse, à savoir la forme d'un film. D'autre part le convoyeur, ainsi que les moyens de découpe, sont constamment imprégnés d'huile de manière à éviter le collage du produit alimentaire.

Ainsi il n'est pas possible avec le dispositif connu précité de réaliser des produits ayant une autre forme que celle d'une feuille. De plus la présence d'huile peut être gênante pour les propriétés gustatives de certains produits.

Or on a trouvé et c'est ce qui fait l'objet de l'invention un procédé de mise en forme lors de son durcissement d'un produit alimentaire continu qui pallie les inconvénients précités. Selon l'invention le procédé consiste :

a) à faire se déplacer continûment une bande support flexible dans une première direction donnée depuis une première zone dite d'alimentation jusqu'à une deuxième zone dite de démoulage, puis, dans une seconde direction opposée à la première direction, jusqu'à une troisième zone dite d'évacuation,

b) à déformer transversalement ladite bande de manière à ce qu'elle constitue un récipient continu dont la section correspond à la forme souhaitée pour le produit fini,
et à alimenter dans la zone d'alimentation le produit alimentaire à l'état liquide dans la bande mise en forme ,

c) à traiter , en amont de la zone de démoulage, le produit jusqu'à durcissement,

d) et , dans la zone de démoulage, à remettre la bande à plat avant qu'elle ne soit entraînée dans la seconde direction opposée à la première vers la zone d'évacuation et à entraîner le produit alimentaire cuit dans la première direction.

Le traitement consiste le plus souvent dans le chauffage du produit.

Dans la mise en forme la plus simple, la déformation transversale de la bande consiste à réaliser sur la bande deux pliures longitudinales , parallèles et à égales distances de chacune des deux lisières de la bande, à relever les bords de la bande en sorte que la bande ait une section en U.

Avantageusement , pendant l'opération de chauffage, on recouvre la partie supérieure de la bande mise en forme d'un moyen de recouvrement imperméable à la vapeur d eau. De préférence on applique une seconde bande d'un matériau imperméable à la vapeur d'eau, se déplaçant continûment de façon identique à la première bande support et positionnée au-dessus de ladite bande support, à l'image d'un couvercle.

Dans une application préférée du procédé, le produit alimentaire est une coule fraîche d'oeuf, blanc ou jaune, et le chauffage consiste à porter la coule à une température suffisante pour obtenir la coagulation de la coule.

C'est un autre objet de l'invention que de protéger une installation spécialement conçue pour la mise en oeuvre du procédé précité. L'installation est du type connu en ce qu'elle comprend des moyens d'alimentation du produit alimentaire liquide et des moyens de chauffage. Selon l'invention, les moyens d'alimentation étant placés dans une première zone dite d'alimentation et les moyens de chauffage entre la zone d'alimentation et une seconde zone dite de démoulage, l'installation comprend :

a) une bande support continue et flexible assortie de premiers moyens de déplacement capables de déplacer ladite bande dans une première direction donnée depuis la zone d'alimentation jusqu'à la zone de démoulage et de seconds moyens de déplacement capables de déplacer ladite bande dans une seconde direction opposée à la première depuis la zone de démoulage jusqu'à une troisième zone dite d'évacuation,

b) des moyens de déformation de la bande et de maintien de la bande mise en forme pendant son déplacement depuis la zone d'alimentation jusqu'à la zone de démoulage ,

c) des moyens de déplacement du produit alimentaire durci selon la première direction.

De préférence la bande support est une bande de papier dont la face en contact avec le produit alimentaire présente un revêtement anti-adhérent , par exemple en polyéthylène.

Les moyens de déformation consistent par exemple dans :

a) deux cylindres de pression qui comportent selon au moins deux directrices l'un une surépaisseur formant empreinte mâle et l'autre un évidement en regard de la surépaisseur et formant empreinte femelle,

b) des moyens de guidage de la bande placés en sorte que les pliures formées sur la bande par les empreintes des cylindres de pression soient parallèles aux bords de la bande et dans la disposition souhaitée,

c) des moyens d'appui placés sur le parcours et de chaque côté de la bande après les cylindres de pression, capables de relever les bords de la bande .

Les moyens de déplacement de la bande selon la seconde direction opposée à la première consistent par exemple en une barre de détour sur laquelle passe la bande dans la zone de démoulage et en un moyen de réception placé sous la bande et après la barre de détour selon la seconde direction , ledit moyen de réception entraînant la bande de telle sorte qu'elle s'applique sur une partie importante de la périphérie de la barre de détour.

De préférence , en particulier, lorsqu'on souhaite que le produit alimentaire durci ait un état de surface très régulier, l'installation comporte une seconde bande continue d'un matériau imperméable à la vapeur d'eau assortie de moyens de déplacement capables de déplacer ladite seconde bande dans la première direction et de positionner ladite seconde bande au-dessus de la première bande support pendant son déplacement dans les moyens de chauffage, de manière à former un couvercle.

Les moyens de chauffage consistent par exemple en une cavité micro-onde , les première et seconde bandes sont dans des matériaux inertes aux micro-ondes et les moyens de maintien de déformation de la première bande comprennent une barre réalisée en un matériau inerte aux micro-ondes , ayant un relief longitudinal en creux dont le profil intérieur correspond à celui de la bande mise en forme. Par exemple la barre de maintien sera constituée par l'assemblage en U de barreaux de quartz.

L'invention sera mieux comprise et d'autres buts, avantages et caractéristiques de celle-ci apparaîtront plus clairement à la lecture de la description qui va maintenant être faite , illustrée par le dessin annexé dans lequel :

La figure 1 est une vue schématique de côté d'un exemple d'installation selon l'invention

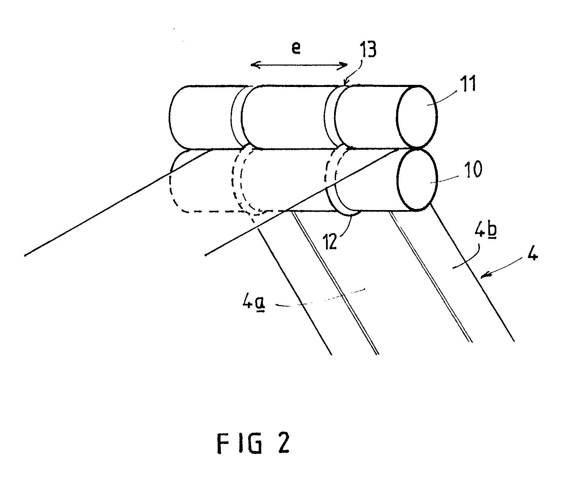

La figure 2 est une vue schématique en perspective des moyens de déformation.

L'installation qui va être décrite est destinée à la mise en forme et à la cuisson d'un produit alimentaire à base de blanc d'oeuf. La cuve 1 , fixée dans la partie haute d'un bâti , non représenté, est équipée d'un agitateur et est thermostatée, de manière à maintenir la coule fraîche de blanc d'oeuf qu'elle contient à une température inférieure à 10°C. La coule provient de casseries où les oeufs sont cassés, les blancs étant séparés des jaunes, homogénéisés et maintenus à basse température, de l'ordre de 4°C de manière à assurer une bonne conservation. Bien sûr il est possible d'ajouter à la coule des ingrédients tels que sels, aromates. La cuve 1 est munie d'une conduite 2 d'alimentation.

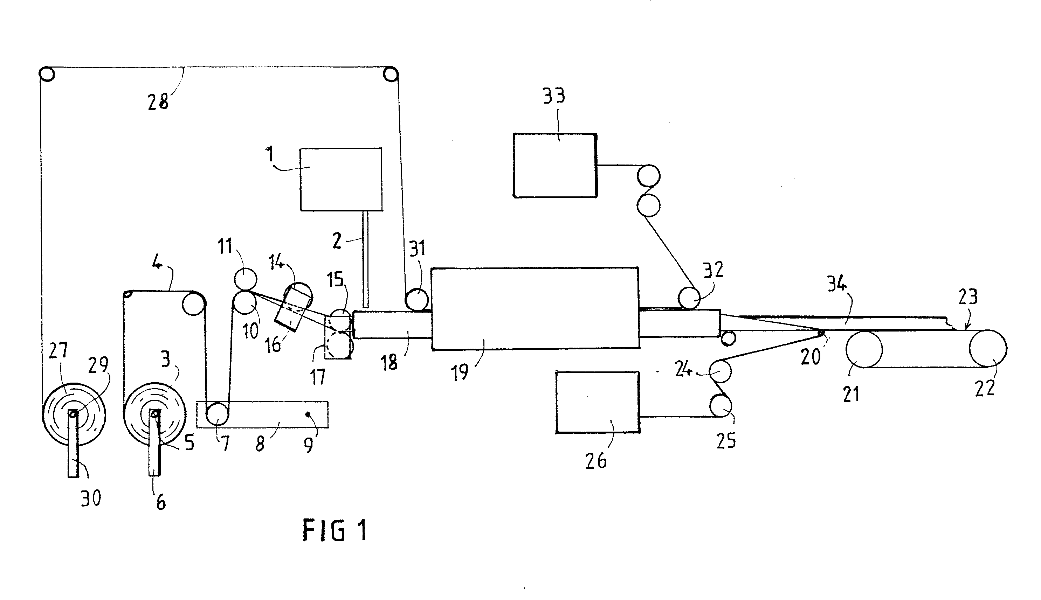

Devant le bâti , à l'extrémité côté gauche sur la figure 1, une bobine 3,constituant un enroulement de la bande de papier 4 ,est emmanchée sur l'axe 5 rotatif du support bobine 6.

La bande de papier 4 a une largeur de 121 mm environ. Le papier est revêtu sur la face tournée vers l'extérieur de la bobine 3 d'une enduction de polyéthylène , limitant l'imprégnation du papier par la coule de blanc.

La bande 4 est supportée et entraînée par un ensemble de rouleaux fixés sur le bâti. Parmi ceux-ci le rouleau 7 assure la régulation de la tension de la bande 4 pendant son déplacement . Les deux extrémités de l'axe de rotation de ce rouleau 7 sont montées sur des paliers fixés sur des bras 8 pivotant autour d'un axe horizontal 9. Des contrepoids sont éventuellement montés, sur les bras 8 ou sur un axe reliant les deux bras 8, à l'extrémité opposée à l'axe de pivotement 9.

Les deux cylindres de pression 10 et 11 ont des axes de rotation parallèles et horizontaux. Ils tournent en sens inverse l'un de l'autre et s'appliquent l'un contre l'autre. Le cylindre inférieur 10 a selon deux directrices distantes de e,soit 121 mm, deux surépaisseurs 12, chacune étant de section triangulaire faisant toute la périphérie du cylindre. Le cylindre supérieur 11 a ,en regard des deux surépaisseurs 12 du cylindre 10, deux évidements 13 de forme complémentaire auxdites surépaisseurs 12. Ainsi lorsque les deux cylindres 10 et 11 sont animés en rotation, les surépaisseurs 12 du cylindre 10 épousent les évidements 13 du cylindre 11.

Les rouleaux 14 et 15 , placés sur le parcours de la bande 4 , ont une largeur égale à l'écartement e ci-dessus. De part et d'autre des rouleaux 14 et 15 sont prévues des flasques respectivement 16 et 17, la première flasque 16 étant en oblique par rapport à l'horizontale, la seconde flasque 17 étant verticale.

Une barre 18 en quartz est fixée horizontalement sur le bâti, immédiatement après le rouleau 17 et longitudinalement par rapport à la bande 4.Elle traverse la cavité micro-onde 19, alimentée par des générateurs non représentés. La barre 18 présente une section transversale en forme de U, l'évidement intérieur ayant une largeur légèrement supérieure à l'écartement e et une hauteur au moins égale à la moitié de la différence entre la largeur de la bande 4 et l'écartement e. La partie haute des deux branches du U comporte de préférence un prolongement rabattu vers l'intérieur du U, capable d'empêcher les bords relevés de la bande de se replier vers la partie centrale.

Dans l'alignement et en aval de la barre 18, la tige 20 est placée transversalement par rapport à la bande 4, et immédiatement derrière la tige 20 le rouleau 21 rotatif supporte, avec le rouleau 22, une courroie transporteuse 23.

Deux rouleaux de détour 24 et 25 sont placés sous la partie aval de la barre 18, dans le sens du déplacement de la bande 4, ainsi qu'un dispositif 26 de déchiquetage de la bande 4.

Devant le bâti, plus à gauche encore que le support bobine 6, une bobine 27, constituant un enroulement de la bande de papier 20, est emmanchée sur l'axe 29 rotatif du support bobine 30.

La bande de papier 28 est du même type que la première bande 4. Du fait du revêtement en polyéthylène,elle est imperméable à la vapeur d'eau. La bande 28 est supportée et entraînée par un ensemble de rouleaux fixés sur le bâti. Parmi ceux-ci , les rouleaux 31 et 32 sont placés , transversalement par rapport à la barre creusée 18, et juste au-dessus de celle-ci, respectivement à l'entrée et à la sortie de la cavité micro-onde 19. A la bande 28 est également associé un dispositif 33 de déchiquetage .

Au cours du fonctionnement de l'installation, la première bande de papier 4 est déroulée de la bobine 3 jusqu'au dispositif de déchiquetage 26. Elle passe successivement sur le rouleau de tension 7, entre les cylindres de pression 10 et 11 et dans la cavité micro-onde 19. En sortant de la bobine 3, la bande 4 est à plat. Lorsqu'elle passe entre les cylindres de pression 10 et 11, les empreintes mâle et femelle que sont les surépaisseurs 12 et les évidements 13 provoquent dans la bande 4 deux marques longitudinales , parallèles aux lisières de la bande et écartées l'une de l'autre de la distance e, soit 121 mm. Des moyens de guidage de la bande 4 sont prévus pour centrer exactement la bande 4 par rapport aux empreintes.

Les flasques 16 relèvent les bords 4b de la bande 4, tandis que le rouleau 14 maintient horizontale la partie centrale 4a de la bande 4. De même, les flasques 17 amènent les bords 4b verticalement par rapport à la partie centrale 4a.

La bande 4 étant dans cette configuration en forme de U, elle est ensuite supportée par la partie intérieure de la barre creusée 18.

La bande 4 passe à plat sur la tige 20, et est entraînée par les rouleaux de traction 24 et 25 vers le dispositif de déchiquetage 26. Les rouleaux de traction sont ici des rouleaux en acier inoxydable, dont la surface est garnie de clous, de telle sorte que la bande 4 , embrochée sur cette garniture, est régulièrement tractée sur toute sa largeur. On comprend qu'entre l'extrémité aval de la barre 18 et la tige 20, les bords 4b de la bande 4 ne sont plus maintenus dans la position verticale et vrillent jusqu'à retrouver leur position initiale.

Le fonctionnement de l'installation est le suivant. La coule fraîche de blanc d'oeuf, stockée dans la cuve 1, est envoyée, dans le récipient formé par la bande 4 conformée en U.

Le débit d'alimentation de la coule est fonction de la section du produit fini souhaité et de la vitesse d'avancement de la bande 4, elle-même étant fonction de la puissance du rayonnement micro-onde. Dans un exemple précis, le débit de coule était de 0,21 l/mn,pour une vitesse de défilement de la bande 4 de 0,3 m/mn et une puissance aux générateurs micro-onde de 1,2 kw.

La coule contenue dans la bande 4 coagule lorsque celle-ci traverse la cavité 19. La bande 28 vient s'ajuster au-dessus de la partie supérieure de la barre 18 et forme un couvercle sensiblement étanche à la vapeur créée lors du chauffage de la coule. Cette disposition particulière permet une perte réduite en vapeur et une meilleure présentation de la surface de la face supérieure du produit fini 34, sortant de la cavité.

A la sortie de la cavité micro-ondes 19, la seconde bande 28 est envoyée vers le dispositif de déchiquetage 33 ; le produit fini 34 est un barreau continu de blanc d'oeuf coagulé , non encore complètement cuit dur, il est souple mais sa consistance est telle qu'il reste dans sa forme donnée par la bande 4, c'est-à-dire dans le présent exemple avec une section rectangulaire , de largeur 121 mm et de hauteur 6 mm. Entre la sortie de la barre 18 et le passage sur la tige 20, les bords 4b de la première bande 4 qui étaient verticaux sont mis à plat, puis le produit fini 34 passe sur la courroie transporteuse 23 vers un autre poste de travail où le produit 34 subira d'autres traitements, par exemple sera tronçonné à la longueur souhaitée et éventuellement coupé dans le sens de sa largeur par des moyens appropriés . Lors du passage sur la tige 20, la bande 4 subit une déviation d'un angle très important, de l'ordre de 120 à 170° , par rapport à sa direction initiale ; ce changement brutal de direction permet un décollement parfait du produit fini 34 de la bande 4. Après ce passage, la bande 4 est envoyée vers le dispositif de déchiquetage 26.

L'invention n'est pas limitée au seul mode de réalisation qui vient d'être décrit mais en couvre toutes les variantes. Les moyens de chauffage peuvent être des moyens plus traditionnels , par exemple infra-rouge, vapeur, ou bain marie ; dans ce cas le matériau constitutif de la bande 4 ainsi que son parcours à travers lesdits moyens de chauffage seront définis en conséquence. La conformation du produit peut être différente de sorte que sa section ait une autre forme que rectangulaire, par exemple triangulaire en réalisant une seule marque de pliage longitudinale au milieu de la bande 4 et en relevant les bords en conséquence. Dans l'exemple ci-dessus, la bande , 4 une fois utilisée, est déchiquetée donc perdue ; il est éventuellement possible qu'elle soit réutilisée grâce à un bobinage adéquat, voire même qu'il s'agisse d'une bande formant une boucle sans fin et retournant après son passage sur la tige 20 vers l'entrée de l'installation. Enfin le produit n'est pas uniquement de la coule fraîche d'oeuf mais tout produit initialement dans un état sensiblement liquide, apte à épouser la forme du récipient dans lequel il est placé, età durcir , après un traitement approprié et notamment un chauffage, en sorte de garder sa forme après démoulage.

## Revendications

1. Procédé de mise en forme d'un produit alimentaire continu lors de son durcissement caractérisé en ce qu'il consiste :

   a) à verser, dans une première zone dite d'alimentation, le produit alimentaire à l'état sensiblement liquide dans la cavité formée par une bande support (4) flexible après que ladite bande (4) ait été mise en forme par déformation transversale

   b) à traiter le produit jusqu'à durcissement

   c) à remettre à plat la bande (4), dans une deuxième zone de démoulage

   d) à entraîner le produit durci (34) et démoulé dans la direction première tandis que la bande à plat (4) est entraînée dans une direction opposée à la première vers une troisième zone dite d'évacuation.

2. Procédé selon la revendication 1 caractérisé en ce que la déformation transversale de la bande (4) consiste à réaliser sur la bande (4) deux pliures longitudinales, parallèles et à égales distances de chacune des deux lisières de la bande, à relever les bords (4b) de la bande en sorte que la bande ait une section en U.

3. Procédé selon l'une des revendications 1 ou 2 caractérisé en ce que le traitement en vue du durcissement consiste à chauffer le produit continu dans la bande (4) en forme.

4. Procédé selon la revendication 3 caractérisé en ce que, pendant l'opération de chauffage, on recouvre la partie supérieure de la bande (4) mise en forme d'un moyen de recouvrement (28) imperméable à la vapeur d'eau.

5. Procédé selon la revendication 4 caractérisé en ce qu'on applique une seconde bande (28) d'un matériau imperméable à la vapeur d'eau, se déplaçant continûment de façon identique à la première bande support (4) et positionnée au-dessus de ladite bande support, à l'image d'un couvercle.

6. Procédé selon la revendication 3 caractérisé en ce que le produit alimentaire est une coule fraîche d'oeuf, blanc ou jaune, et le chauffage consiste à porter la coule à une température suffisante pour obtenir la coagulation de la coule.

7. Installation pour la mise en forme d'un produit alimentaire continu lors de son durcissement, du type comprenant des moyens d'alimentation du produit alimentaire à l'état sensiblement liquide et des moyens de chauffage, caractérisée en ce que les moyens d'alimentation étant placés dans une première zone dite d'alimentation et les moyens de chauffage entre la zone d'alimentation et une seconde zone dite de démoulage, l'installation comprend :

a) une bande support (4) continue et flexible assortie de premiers moyens de déplacement capables de déplacer ladite bande dans une première direction donnée depuis la zone d'alimentation jusqu'à la zone de démoulage et de seconds moyens de déplacement capables de déplacer ladite bande dans une seconde direction opposée à la première depuis la zone de démoulage jusqu'à une troisième zone dite d'évacuation,

b) des moyens de déformation (10,11) de la bande et de maintien (18) de la bande (4) mise en forme pendant son déplacement depuis la zone d'alimentation jusqu'à la zone de démoulage,

c) des moyens de déplacement (23) du produit alimentaire durci (34) selon la première direction.

8. Installation selon la revendication 7 caractérisée en ce que la bande support (4) est une bande de papier dont la face en contact avec le produit alimentaire présente un revêtement anti-adhérent , par exemple téfloné.

9. Installation selon l'une des revendications 7 ou 8 caractérisée en ce que les moyens de déformation consistent dans :

a) deux cylindres de pression (10,11) qui comportent selon au moins deux directrices l'un (10) une surépaisseur (12) formant empreinte mâle et l'autre un évidement (13) en regard de la surépaisseur (12) et formant empreinte femelle,

b) des moyens de guidage de la bande placés en sorte que les pliures formées sur la bande par les empreintes des cylindres de pression soient parallèles aux bords de la bande et dans la disposition souhaitée,

c) des moyens d'appui (16,17) placés sur le parcours et de chaque côté de la bande après les cylindres de pression (10,11) , capables de relever les bords (4b) de la bande .

10. Installation selon l'une des revendications 7 ou 8 caractérisée en ce que les moyens de déplacement de la bande selon la seconde direction opposée à la première consistent en une barre de détour (20) sur laquelle passe la bande (4) dans la zone de démoulage et en un moyen de réception placé sous la bande et après la barre de détour selon la seconde direction, ledit moyen de réception entraînant la bande de telle sorte qu'elle s'applique sur une partie importante de la périphérie de la barre de détour.

11. Installation selon l'une des revendications 7 ou 8 caractérisée en ce qu'elle comporte une seconde bande continue (28) d'un matériau imperméable à la vapeur d'eau assortie de moyens de déplacement capables de déplacer ladite seconde bande (28) dans la première direction et de positionner ladite seconde bande (28) au-dessus de la première bande support (4) pendant son déplacement dans les moyens de chauffage (19) , de manière à former un couvercle.

12. Installation selon les revendications 9 et 11 caractérisée en ce que les moyens de chauffage consistent en une cavité micro-onde (19) , les première (4) et seconde (28) bandes sont dans des matériaux inertes aux micro-ondes et les moyens d'appui comprennent une barre (18) en un matériau inerte aux micro-ondes creusée longitudinalement selon un profil correspondant à la bande (4) mise en forme.

FIG 1

EP 0 354 091 A1

FIG 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 920 370  (R.E. MILLER) <br> * Revendications 1-2; colonne 2, lignes 42-47; colonne 4, lignes 3-9; colonne 6, lignes 13-18 * <br> --- | 1-2,6-7 | A 23 P    1/10 <br> A 23 L    1/322 |
| A | FR-A-2 498 897  (P. PIQUILLOUD et al.) <br> * Revendications 1,5; page 6, lignes 18-30 * <br> ----- | 3,6,12 | |

DOMAINES TECHNIQUES
RECHERCHES (Int. Cl.5)

A 23 L
A 23 P

Le présent rapport a été établi pour toutes les revendications

| Lieu de la recherche | Date d'achèvement de la recherche | Examinateur |
|---|---|---|
| LA HAYE | 19-09-1989 | SANTOS Y DIAZ A.I. |

EPO FORM 1503 03.82 (P0402)